# EUROPÄISCHE PATENTSCHRIFT

(11) **EP 3 298 900 B1**
(45) Veröffentlichungstag und Bekanntmachung des Hinweises auf die Patenterteilung: **06.11.2019**
(21) Anmeldenummer: 17186587.6
(22) Anmeldetag: 17.08.2017
(51) Int. Cl.: A21C 7/00

(54) **KAMMERTROMMEL FÜR EINE TEIG-WIRKVORRICHTUNG**
CHAMBER DRUM FOR A PASTRY PROCESSING DEVICE
TAMBOUR À CHAMBRE POUR UN DISPOSITIF DE PÉTRISSAGE DE LA PÂTE

(30) Priorität: 27.09.2016 DE 102016218485
(43) Veröffentlichungstag der Anmeldung: 28.03.2018
(73) Patentinhaber: Werner & Pfleiderer Lebensmitteltechnik GmbH, 91550 Dinkelsbühl (DE)
(72) Erfinder: Meier, Alexander, 91602 Dürrwangen (DE)
(74) Vertreter: Rau, Schneck & Hübner Patentanwälte Rechtsanwälte PartGmbB

(56) Entgegenhaltungen:
- DE-A1- 10 304 298
- DE-U1- 7 834 943
- NL-A- 9 200 818
- US-A1- 2007 166 422
- US-A1- 2013 022 700

## Beschreibung

Die Erfindung betrifft eine Kammertrommel für eine Teig-Wirkvorrichtung gemäß Anspruch 1.

Eine Kammertrommel gemäß dem Stand der Technik. ist beispielsweise aus der DE 102 49 496 A1 bekannt. Sie weist einen hohlen Trommelkörper mit einer Vielzahl von radial durchgehenden Durchbrechungen in dessen Mantelwand zur Bildung jeweils einer Kammer für ein zu bearbeitendes Teigstück auf.

Eine solche Kammertrommel ist wesentliches Teil einer Teig-Wirkvorrichtung, bei der die Teiglinge jeweils in einer von vielen Kammern gewirkt werden, die zwischen einer inneren, angetriebenen Wirktrommel, einer jeweiligen Durchbrechung in der Mantelwand des Trommelkörpers und einem die Kammertrommel über einen Umfangsabschnitt davon abdeckenden, angetriebenen Wirkband gebildet sind.

Bei diesem Wirkprozess besteht je nach dem Klebeverhalten der Teiglinge oder ähnlicher zu verarbeitender Produkte das Problem, dass beispielsweise bei sehr weichen Teigqualitäten die Teiglinge zu einem Ankleben an den Begrenzungsflächen der Kammer neigen. Relativ trockene Teigqualitäten führen dazu, dass die Beaufschlagung der Teiglinge aufgrund der mangelnden Adhäsion zwischen den Begrenzungsflächen der Kammer und dem Teigling verbesserungsbedürftig erscheint.

Zur Problematik des übermäßigen Klebens der Teiglinge an die Begrenzungsflächen der Kammern ist es bereits bekannt, die Teig-Wirkvorrichtung zu bemehlen, indem vor der Übergabe der Teiglinge aus der Teig-Teilvorrichtung auf die Kammertrommel Mehl aufgebracht wird. Hier besteht das Problem, dass die ebenen, glatten Begrenzungsflächen der Kammern für eine Mehlaufnahme und Anhaftung naturgemäß wenig geeignet sind.

Die EP 1 621 078 A1 und DE 78 34 943 U1 offenbaren eine Wirkmaschine für Teigstücke. Eine Wirkkammer dieser Wirkmaschine weist jeweils einen Bewirkungsring auf. Letzterer übt im unteren Bereich der Wirkkammer einen verstärkten seitlichen Krafteinfluss auf das Teigstück aus, wodurch eine erhöhte Energieeinleitung im unteren Bereich des Teigstücks erfolgt.

Die US 7,527,492 B3 (Paralleldokument US 2007/0166422 A1) offenbart eine Wirkleiste zum Grundwirken von Teiglingen mit einem Viertelkreis-Profil, wobei ein Teigling dieser schräg angestellt angeordneten Wirkleiste über ein Förderband zugestellt wird. Die US 2013/0022700 A1 beschreibt eine Schneidleiste mit einer strukturierten Oberfläche.

Der Erfindung liegt dementsprechend die Aufgabe zugrunde, eine Kammertrommel für eine Teig-Wirkvorrichtung der gattungsgemäßen Art so weiterzubilden, dass das Wirkverhalten im Kontext verschiedener Teigqualitäten verbessert wird.

Die Lösung dieser Aufgabe liegt in den Merkmalen des kennzeichnenden Teil des Anspruches 1.

Durch diese Ausgestaltung der die Kammern der Teig-Wirkvorrichtung seitlich begrenzenden Oberflächen wird insbesondere bei Teiglingen aus klebenden Teigqualitäten die ansonsten bei ebenen Oberflächen stark ausgeprägte Adhäsionsneigung signifikant verringert, so dass ein Ankleben reduziert wird. Im gleichen Sinne wirkt ein weiterer Effekt der Oberflächenstrukturierung, nämlich die verbesserte Mehl-Aufnahme gegenüber einer glatten Oberfläche.

Schließlich bringt die Oberflächenstrukturierung nicht nur bei stark klebenden Teigqualitäten, sondern - im Gegenteil - auch bei relativ trockenen Teiglingen einen erheblichen Vorteil. Die Impulsübertragung zwischen der wirkenden Oberfläche der Durchbrechungen in der Kammertrommel führen zu einer höheren Reibung zwischen dem Teigling und der Seitenwand, so dass eine Übertragung der Wirkkräfte deutlich verbessert wird.

Die Oberflächen-Strukturierung erstreckt sich vollständig über alle Seitenwände der Durchbrechungen. Bevorzugte Weiterbildungen der Kammertrommel sind in den abhängigen Ansprüchen angegeben.

Die Oberflächen-Strukturierung erstreckt sich also insbesondere axial nicht nur über einen Teilbereich der jeweiligen Wirkkammer, sondern über eine gesamte axiale Erstreckung der Wirkkammer.

Die Ausbildung und Dimensionierung der Oberflächen-Strukturierung sieht Vertiefungen und/oder Erhebungen in bzw. auf der Oberfläche der jeweiligen Seitenwand vor. Die Tiefe bzw. Höhe dieser Strukturelemente beträgt wischen 0,1 mm und 8 mm. Die tatsächliche Dimensionierung richtet sich in erster Linie nach der Wechselwirkung mit den jeweils zu bearbeitenden Teigqualitäten und kann von einem Fachmann ohne erfinderisches Zutun durch geeignete Versuche ermittelt werden.

Herstellungstechnische Vorteile werden erreicht, wenn die Vertiefungen und/oder Erhebungen in einem regelmäßigen Flächenraster angeordnet sind. Das Flächenmaß eines einzelnen Rasterelementes kann dann vorzugsweise zwischen 1 mm² und 50 mm², besonders bevorzugt zwischen 10 mm² und 30 mm² betragen.

Für die Ausbildung der Oberflächen-Strukturierung bieten sich vielfache Möglichkeiten an. Erfindungsgemäß sind die über die Oberfläche der Seitenwände verteilt angeordneten Strukturelemente als Erhebungen in Kugelsegment-, Pyramiden-, Pyramidenstumpf-, Kegel-, Kegelstumpf-, Zylinder-, Quader-, Steg-, Würfel- oder anderweitige Prismen-Form gebildet. Strukturelemente als Vertiefungen können in Form von entsprechend geformten Nuten, Bohrungen oder kalottenförmigen Ausfräsungen gebildet sein.

Gemäß einer weiteren bevorzugten Ausführungsform können die jeweils gegenüberstehenden Seitenwände der Durchbrechungen in einem sich radial nach außen öffnenden Winkel zueinander stehen. Durch diese trichterartige Positionierung der gegenüberstehenden Seitenwände wird das Bemehlungsverhalten der Kammern weiter verbessert.

Die Durchbrechungen in der Kammertrommel selbst können verschiedenste Umrissformen aufweisen, wie beispielsweise eine polygone (z.B. 5- bis 12-eckig), runde oder ovale Umrissform, die sich gleichmäßig oder auch ungleichmäßig ausprägen kann. Zu bevorzugen wird allerdings eine quadratische oder rechteckige Umrissform sein.

Die Mantelwand des hohlen Trommelkörpers kann zylindrisch oder im Querschnitt polygonzugartig ausgebildet sein. In letzterem Falle wären dann die Durchbrechungen jeweils in einem ebenen Umfangsabschnitt des polygonzugartigen Querschnitts aneinandergereiht angeordnet.

Die Erfindung betrifft außerdem eine Teig-Wirkvorrichtung mit einer inneren angetriebenen Wirktrommel, einer erfindungsgemäßen Kammertrommel und einem die Kammertrommel über einen Umfangsabschnitt davon abdeckenden, angetriebenen Wirkband.

Weitere Merkmale, Einzelheiten und Vorteile der Erfindung ergeben sich aus der nachfolgenden Beschreibung von Ausführungsbeispielen anhand der beigefügten Zeichnungen. Es zeigen:
- Fig. 1: eine perspektivische Ansicht einer Kammertrommel für eine Teig- Wirkvorrichtung,
- Fig. 2: eine Seitenansicht der Kammertrommel quer zu deren Rotationsachse,
- Fig. 3: einen rotationsaxialen Schnitt der Kammertrommel gemäß Schnittlinie III-III nach Fig. 2,
- Fig. 4: einen Querschnitt der Kammertrommel gemäß Schnittlinie IV-IV nach Fig. 2 in gestrichelt angedeuteter Einbauposition in einer Teig-Wirkvorrichtung,
- Fig. 5: einen Querschnitt einer Kammertrommel in einer alternativen Ausführungsform,
- Fig. 6: eine vergrößerte Detail-Draufsicht auf die Seitenwand einer Durchbrechung der Kammertrommel gemäß Einzelheit VI nach Fig. 3,
- Fig. 7: einen Schnitt durch die Seitenwand einer Durchbrechung der Kammertrommel nach Schnittlinie VII-VII gemäß Fig. 6, sowie
- Fig. 8 und 9: Schnitte analog Fig. 6 mit weiteren unterschiedlichen Ausführungsformen der Oberflächen-Strukturierung.

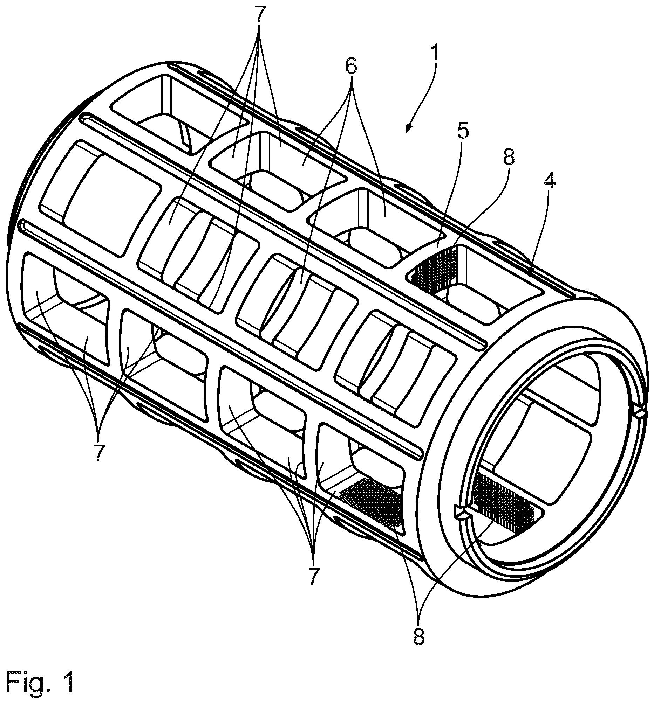

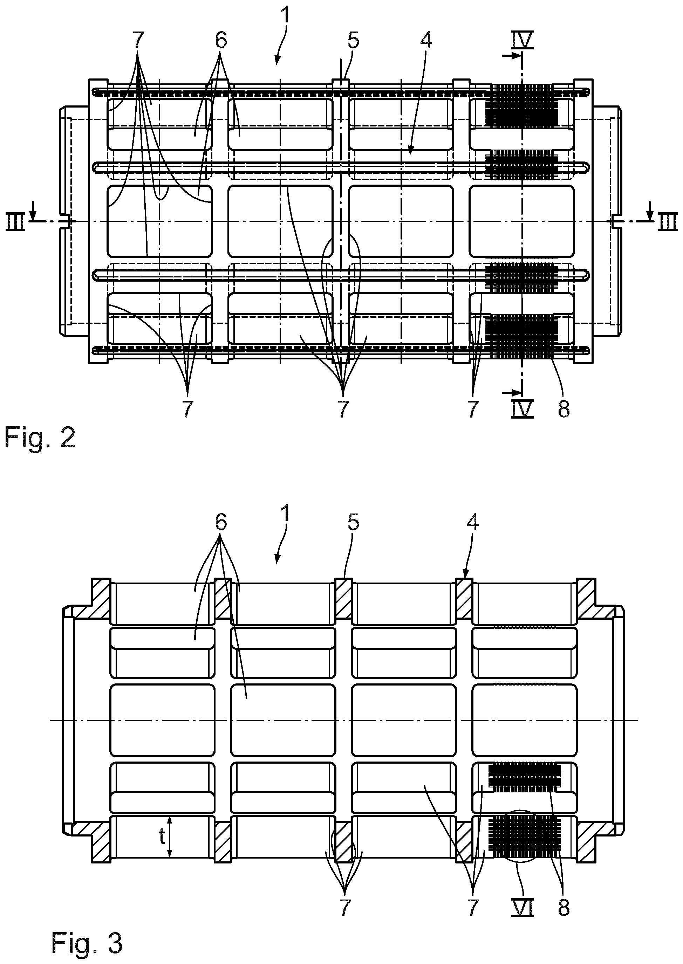

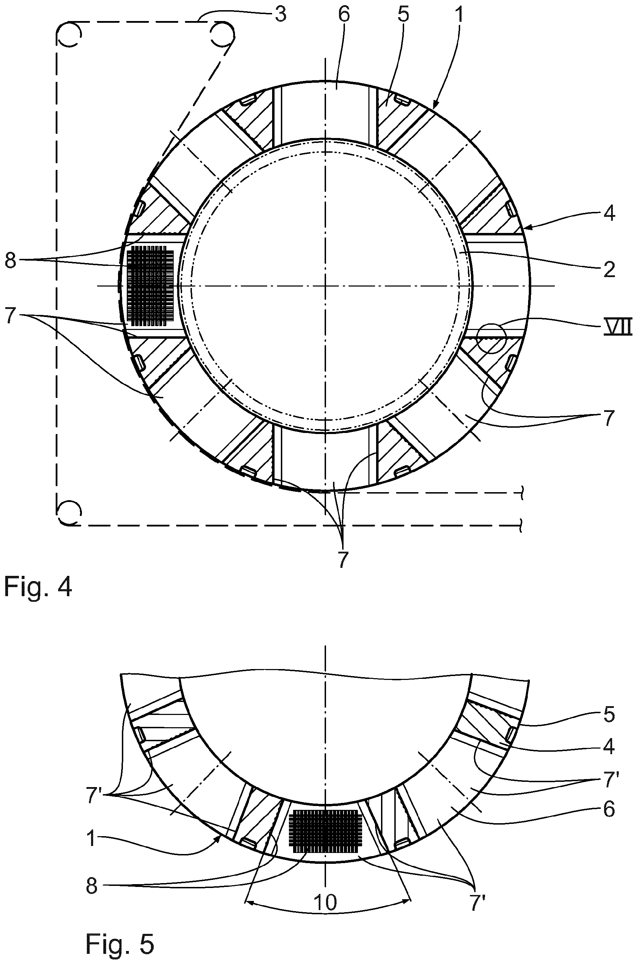

Die in den Fig. 1 bis 4 gezeigte Kammertrommel 1 ist wesentliches Teil einer in Fig. 4 mit ihren wesentlichen Elementen dargestellten Teig-Wirkvorrichtung. Letztere weist neben der Kammertrommel 1 noch die innere, in Dreh- und Axial-Richtung relativ zur Kammertrommel 1 angetriebene Wirktrommel 2 (doppelstrichpunktiert dargestellt) sowie ein die Kammertrommel 1 über einen Umfangsabschnitt davon abdeckendes, ebenfalls angetriebenes Wirkband 3 (gestrichelt dargestellt) auf. Die grundsätzliche Betriebsweise dieser Teig-Wirkvorrichtung ist bekannt und bedarf demnach keiner gesonderten nochmaligen Beschreibung.

Die Kammertrommel 1 weist als tragendes Element einen hohlen Trommelkörper 4 auf, in dessen zylindrischer Mantelwand 5 eine Vielzahl von radial durchgehenden Durchbrechungen 6 vorgesehen sind. Im gezeigten Ausführungsbeispiel weisen die Durchbrechungen 6 eine rechteckige Umrissform mit leicht abgerundeten Eckbereichen auf. Scharfkantige Formen mit oder ohne Fasen an den Kantenbereichen können ebenfalls realisiert werden. Gleichmäßig über Länge und Umfang des Trommelkörpers 4 sind in der gezeigten Version acht Reihen zu je vier solcher Durchbrechungen 6 vorgesehen. Größe, Anzahl und Anordnung der Durchbrechungen 6 können je nach den zu bearbeitenden Teiglingen und der Kapazität der Teig-Wirkvorrichtung variieren. Grundsätzlich wäre jede beliebige Anzahl von Reihen mit jeweils einer beliebigen Anzahl von Durchbrechungen denkbar. Jede Durchbrechung 6 bildet zusammen mit der inneren Wirktrommel 2 und dem äußeren Wirkband 3 eine Kammer, in der das darin zu bearbeitende Teigstück während des Umlaufs in dem vom Wirkband 3 abgedeckten Peripherabschnitt der Kammertrommel 1 entsprechend gewirkt und anschließend ausgegeben wird.

Wie in Fig. 1 bis 3 nur in zwei unterschiedlichen Durchbrechungen 6 und dort auch nur über eine Teilfläche gezeichnet ist, ist die Oberfläche der Seitenwände 7 der Durchbrechungen mit einer Oberflächenstrukturierung 8 versehen. Diese erstreckt sich - anders als gezeichnet - über die kompletten Seitenwände 7 jeweils aller Durchbrechungen 6.

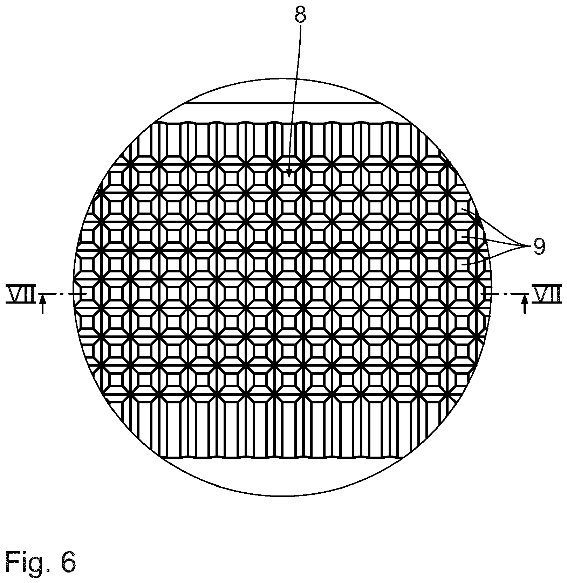

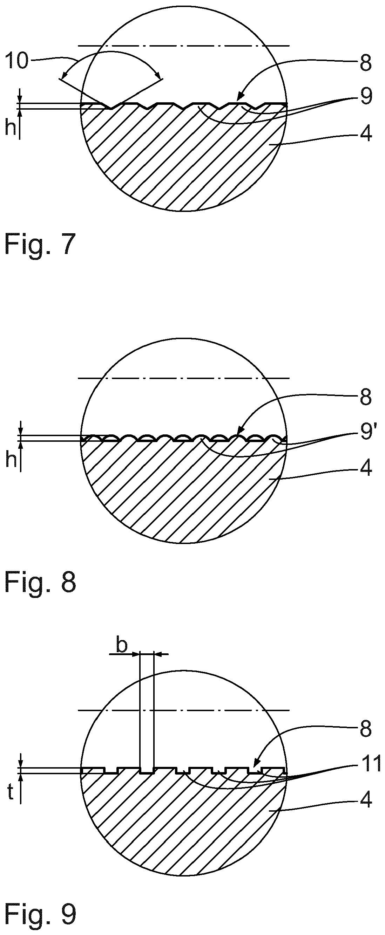

Wie anhand von Fig. 6 und 7 deutlich wird, wird die Oberflächen-Strukturierung 8 in diesem Ausführungsbeispiel durch Erhebungen 9 in Pyramidenstumpf-Form gebildet, die eng an eng in einem regelmäßigen Flächenraster angeordnet sind. Auch eine unregelmäßige Anordnung kann vorgesehen sein. Die quadratische Grundfläche dieser Erhebungen 9 beträgt etwa 20 bis 25 mm², die Höhe h etwa 0,6 mm bis 0,8 mm.

Wie aus Fig. 4 deutlich wird, sind bei dieser Ausführungsform in üblicher Weise die gegenüberliegenden Seitenwände 7 jeder Durchbrechung 6 parallel zueinander angeordnet.

In der in Fig. 5 gezeigten Variante sind die parallel zur Rotationsachse der Kammertrommel 1 verlaufenden Seitenwände 7' radialparallel ausgerichtet, so dass sie in einem sich radial nach außen öffnenden Winkel 10 ausgerichtet sind. Damit stehen diese Seitenwände 7' flacher zur Umfangsfläche der Kammertrommel 1, was - wie bereits oben erwähnt - die Bemehlung der Seitenwände 7' begünstigt.

Bei der in Fig. 8 gezeigten Ausführungsform ist die Strukturierung 8 durch Erhebungen 9' in Form von kugelsegmentförmigen Noppen gestaltet. Deren Reihen sind so versetzt zueinander angeordnet, dass - wie aus der Fig. 8 deutlich wird - die Noppen auf Lücke stehen. Die Dimensionierung der Noppen liegt in der Größenordnung der pyramidenstumpförmigen Erhebungen 9 beim Ausführungsbeispiel gemäß Fig. 6 und 7.

Der Fußdurchmesser der Noppen beträgt beispielsweise 4 mm, ihre Höhe h 1 mm.

Bei der in Fig. 9 gezeigten Ausführungsform ist die Oberflächen-Strukturierung 8 durch Vertiefungen 11 in Form von in regelmäßigen Abständen parallel zueinander angeordneten, eingefrästen Nuten geschaffen. Deren Querschnittsmaß (Breite b x Tiefe t) beträgt etwa 1 mm x 1 mm, ihr Abstand beispielsweise 2 mm.

## Patentansprüche

1. Kammertrommel für eine Teig-Wirkvorrichtung, umfassend
- einen hohlen Trommelkörper (4), und
- eine Vielzahl von radial durchgehenden Durchbrechungen (6) in dessen Mantelwand (5) zur Bildung jeweils einer Kammer für ein zu bearbeitendes Teigstück,
- mit einer Oberflächen-Strukturierung (8) der Seitenwände (7) der Durchbrechungen (6),
- **dadurch gekennzeichnet, dass** sich die Oberflächen-Strukturierung (8) vollständig über alle Seitenwände (7) der Durchbrechungen (6) erstreckt,
- dass die Oberflächen-Strukturierung (8) durch Vertiefungen (11) und/oder Erhebungen (9, 9') in und/oder auf der Oberfläche der jeweiligen Seitenwand (7) gebildet sind, deren Tiefe (t) und/oder Höhe (h) zwischen einem Zehntelmillimeter und wenigen Millimetern beträgt,
- dass die Tiefe (t) der Vertiefungen (11) in der Oberfläche der jeweiligen Seitenwand (7) und/oder die Höhe (h) der Erhebungen (9, 9') auf der Oberfläche der jeweiligen Seitenwand (7) zwischen 0,1 mm und 8 mm beträgt,
- dass die Oberflächen-Strukturierung (8) durch über die Oberflächen der Seitenwände (7) verteilt angeordnete Erhebungen (9, 9') in Kugelsegment-, Pyramiden-, Pyramidenstumpf-, Kegel-, Kegelstumpf-, Zylinder-, Quader-, Steg-, Würfel- oder Prismen-Form gebildet ist.

2. Kammertrommel nach Anspruch 1, **dadurch gekennzeichnet, dass** die Vertiefungen (11) und/oder Erhebungen (9, 9') in einem regelmäßigen oder unregelmäßigen Flächenraster angeordnet sind, dessen Flächenmaß eines einzelnen Rasterelementes vorzugsweise zwischen 1 mm² und 50 mm², besonders bevorzugt zwischen 10 mm² und 30 mm² beträgt.

3. Kammertrommel nach einem der Ansprüche 1 bis 2, **dadurch gekennzeichnet, dass** die Oberflächen-Strukturierung (8) durch vorzugsweise regelmäßig über die Oberflächen der Seitenwände (7) verteilt angeordnete Vertiefungen (11) in Form von Nuten, Bohrungen oder kalottenförmigen Ausfräsungen gebildet ist.

4. Kammertrommel nach einem der vorgenannten Ansprüche, **dadurch gekennzeichnet, dass** die jeweils gegenüberstehenden Seitenwände (7) der Durchbrechungen (6) parallel oder in einem sich radial nach außen öffnenden Winkel (10) zueinander stehen.

5. Kammertrommel nach einem der vorgenannten Ansprüche, **dadurch gekennzeichnet, dass** das die Durchbrechungen (6) eine quadratische, rechteckige, polygone, runde oder ovale Umrissform aufweisen.

6. Kammertrommel nach einem der vorgenannten Ansprüche, **dadurch gekennzeichnet, dass** das die Mantelwand (5) des hohlen Trommelkörpers (4) zylindrisch oder im Querschnitt polygonzugartig ausgebildet ist.

7. Teig-Wirkvorrichtung mit
- einer inneren, angetriebenen Wirktrommel (2),
- einer Kammertrommel (1) nach mindestens einem der vorgenannten Ansprüche, und
- einem die Kammertrommel (1) über einen Umfangsabschnitt davon abdeckenden, angetriebenen Wirkband (3).

## Claims

1. Chamber drum for a dough kneading device, comprising
- a hollow drum body (4), and
- a plurality of radially penetrating breakthroughs (6) in the outer peripheral wall (5) thereof to form a chamber for in each case one dough piece to be treated,
- with a surface structuring (8) of the side walls (7) of the breakthroughs (6),
**characterized in**
- **that** the surface structuring (8) extends entirely across all side walls (7) of the breakthroughs (6)
- **that** the surface structuring (8) is formed by recesses (11) and/or elevations (9, 9') in and/or on the surface of the respective side wall (7), wherein the depth (t) and/or the height (h) thereof amounts to between a tenth of a millimeter and some millimeters,
- **that** the depth (t) of the recesses (11) in the surface of the respective side wall (7) and/or the height (h) of the recesses (9, 9') on the surface of the respective side wall (7) amounts to between 0.1 mm and 8 mm,
- **that** the surface structuring (8) is formed by elevations (9, 9') in the shape of a spherical ball, pyramid, truncated pyramid, cone, truncated cone, cylinder, cuboid, web, cube or prism, wherein the elevations (9, 9') are arranged across the surfaces of the side walls (7).

2. Chamber drum according to claim 1, **characterized in that** the recesses (11) and/or elevations (9, 9') are arranged in a regular or an irregular grid, wherein the surface area of an individual grid element preferably amounts to between 1 mm² and 50 mm², particularly preferably to between 10 mm² and 30 mm².

3. Chamber drum according to any one of claims 1 to 2, **characterized in that** the surface structuring (8) is formed by recesses (11) in the shape of grooves, holes or dome-shaped cutouts that are arranged across the surfaces of the side walls (7) in a preferably regular manner.

4. Chamber drum according to any one of the preceding claims, **characterized in that** the side walls (7), being in each case arranged opposite one another, of the breakthroughs (6) are arranged parallel to each other or at an angle (10) that opens radially outwardly.

5. Chamber drum according to any one of the preceding claims, **characterized in that** the breakthroughs (6) have a square, rectangular, polygonal, round or oval contour shape.

6. Chamber drum according to any one of the preceding claims, **characterized in that** the outer peripheral wall (5) of the hollow drum body (4) is configured cylindrically or in the shape of a polygonal line when seen in cross-section.

7. Dough kneading device with
- an internal driven kneading drum (2),
- a chamber drum (1) according to at least one of the preceding claims, and
- a driven kneading belt (3) covering the chamber drum (1) in a peripheral portion thereof.

## Revendications

1. Tambour à chambres pour un dispositif de traitement de pâte, comprenant
- un corps de tambour creux (4), et
- une pluralité d'ouvertures (6) s'étendant dans le sens radial dans sa paroi d'enveloppe (5) pour former respectivement une chambre pour un morceau de pâte à traiter,
- comportant une structure de surface (8) des parois latérales (7) des ouvertures (6),
- **caractérisé en ce que**
la structure de surface (8) s'étend complètement sur toutes les parois latérales (7) des ouvertures (6),
- la structure de surface (8) est formée par des évidements (11) et/ou des protubérances (9, 9') dans et/ou sur la surface de la paroi latérale respective (7), dont la profondeur (t) et/ou la hauteur (h) est comprise entre un dixième de millimètre et quelques millimètres,
- la profondeur (t) des évidements (11) dans la surface de la paroi latérale respective (7) et/ou la hauteur (h) des protubérances (9, 9') sur la surface de la paroi latérale respective (7) est comprise entre 0,1 et 8 mm,
- la structure de surface (8) est formée par des protubérances (9, 9') sous forme de segment sphérique, de pyramide, de pyramide tronquée, de cône, de cône tronqué, de cylindre, de parallélépipède, de nervure, de cube ou de prisme, réparties sur les surfaces des parois latérales (7).

2. Tambour à chambres selon la revendication 1, **caractérisée en ce que** les évidements (11) et/ou les protubérances (9, 9') sont disposées dans une grille régulière ou irrégulière, dont la dimension de surface d'un élément de grille individuel est de préférence comprise entre 1 et 50 mm², de manière particulièrement préférée entre 10 et 30 mm².

3. Tambour à chambres selon l'une des revendications 1 à 2, **caractérisé en ce que** la structure de surface (8) est formée par des évidements (11) sous la forme de rainures, d'alésages ou de fraisages en forme de calotte, de préférence régulièrement répartis sur les surfaces des parois latérales (7).

4. Tambour à chambres selon l'une des revendications précédentes, **caractérisé en ce que** les parois latérales opposées respectives (7) des ouvertures (6) sont parallèles l'une à l'autre ou sont disposées selon un angle (10) s'ouvrant radialement vers l'extérieur.

5. Tambour à chambres selon l'une des revendications précédentes, **caractérisé en ce que** les ouvertures (6) présentent un contour carré, rectangulaire, polygonal, rond ou ovale.

6. Tambour à chambres selon l'une des revendications précédentes, **caractérisé en ce que** la paroi d'enveloppe (5) du corps de tambour creux (4) a une configuration cylindrique ou en section transversale polygonale.

7. Dispositif de traitement de pâte, comportant
- un tambour de façonnage interne entraîné (2),
- un tambour à chambres (1) selon au moins l'une des revendications précédentes, et
- une bande de pétrissage entraînée (3) recouvrant une partie périphérique du tambour à chambres (1).
